Europäisches Patentamt

European Patent Office

Office européen des brevets

(19)

(11) Veröffentlichungsnummer: **0 166 929 B1**

(12)

# EUROPÄISCHE PATENTSCHRIFT

(45) Veröffentlichungstag der Patentschrift: **13.11.91**

(21) Anmeldenummer: **85105945.1**

(22) Anmeldetag: **14.05.85**

(51) Int. Cl.⁵: **H01R 4/26**, H01R 4/24, B62J 15/00

(54) **Elektrische Kontaktierungseinrichtung für sandwichartig aufgebaute, aus Kunststoff und wenigstens einer von dem Kunststoff allseitig umschlossenen Metallfolie bestehende Radkotschützer.**

(30) Priorität: **06.06.84 DE 3420960**

(43) Veröffentlichungstag der Anmeldung:
**08.01.86 Patentblatt 86/02**

(45) Bekanntmachung des Hinweises auf die Patenterteilung:
**13.11.91 Patentblatt 91/46**

(84) Benannte Vertragsstaaten:
**AT BE CH DE FR GB IT LI LU NL SE**

(56) Entgegenhaltungen:
**FR-A- 1 551 584**
**FR-A- 2 265 194**
**GB-A- 1 222 067**
**US-A- 3 535 678**

(73) Patentinhaber: **ESGE-Marby GmbH + Co. KG.**
**Braker Strasse 1**
**W-4800 Bielefeld 16(DE)**

(72) Erfinder: **Belka, Heinrich**
**Uchteweg 3**
**W-4800 Bielefeld 11(DE)**

(74) Vertreter: **Rüger, Rudolf, Dr.-Ing. et al**
**Webergasse 3 Postfach 348**
**W-7300 Esslingen/Neckar(DE)**

## Beschreibung

Die Erfindung geht aus von einer elektrischen Kontaktierungseinrichtung für sandwichartig aufgebaute, aus Kunststoff und wenigstens einer von dem Kunststoff allseitig umschlossenen Metallfolie bestehende Radkotschützer gemäß dem Oberbegriff des Hauptanspruches.

Bei einer derartigen aus der DE-AS 16 80 844 bekannten elektrischen Kontaktierungseinrichtung sind randseitig an eine kreisförmige flache Scheibe mehrere zackenförmige Fortsätze angeformt, die rechtwinklig aus der Unterseite der Scheibe hervorstehen. Mit diesen Fortsätzen voran wird bei der Montage die Kontaktierungseinrichtung in den Radkotschützer eingedrückt. Hernach werden die auf der gegenüberliegenden Seite aus dem Radkotschützer herausschauenden Spitzen der Fortsätze nach innen oder außen umgenietet, um die Kontaktierungseinrichtung sicher in dem Radkotschützer festzuhalten.

Hierbei sollen die den Radkotschützer durchdringenden Fortsätze mit der Metallfolie elektrischen Kontakt machen, die sandwichartig zwischen zwei Kunststofffolien oder -bahnen allseitig umschlossen eingebettet ist, um eine kabelfreie Stromzuführung für die auf dem Radkotschützer oder in dessen Nähe angebrachten elektrischen Einrichtungen, beispielsweise die Fahrradbeleuchtung, zu erhalten. Der Aufbau dieses Radkotschützers ist in der DE-AS 16 80 844 ausführlich beschrieben.

Es hat sich jedoch im Laufe der Zeit herausgestellt, daß diese an sich recht vorteilhafte Kontaktierungseinrichtung nach längerem Gebrauch einen ständig größer werdenden Übergangswiderstand zwischen den Fortsätzen und der Metallfolie des Radkotschützers zeigt, bis hin zur vollständigen Stromunterbrechung.

Ausgehend hiervon liegt der Erfindung die Aufgabe zugrunde, eine elektrische Kontaktierungseinrichtung für die in der DE-AS 16 80 844 beschriebenen Radkotschützer zu schaffen, die einen verringerten Übergangswiderstand zu der Metallfolie aufweist, der auch unter ungünstigen Witterungsbedingungen über einen bedeutend längeren Zeitraum erhalten bleibt.

Zur Lösung dieser Aufgabe ist die erfindungsgemäße Kontaktierungseinrichtung durch die Merkmale des Hauptanspruches gekennzeichnet.

Weil lediglich ein Fortsatz vorgesehen ist, der konzentrisch sowohl zum Kopf als auch zu der Befestigungseinrichtung verläuft, wird durch die Anlageflächen des Kopfes und der Befestigungseinrichtung an der Kunststoffaußenseite des Radkotschützers eine Abdichtung für die Kontaktstelle zwischen dem Fortsatz und der Metallfolie erreicht und es können korrodierende Einflüsse, wie Feuchtigkeit und Salzwasser, von der Kontaktstelle wirksam ferngehalten werden. Die Vielzahl der aus dem Außenumfang des Fortsatzes hervorstehenden Vorsprünge hingegen ergibt eine große Anzahl von Kontaktstellen zwischen dem Fortsatz und der Metallfolie, und zwar selbst dann, wenn die eine oder andere Kontaktstelle zwischen einem Fortsatz und der Metallfolie von Anfang an unzureichend war oder im Laufe der Zeit sich verschlechtert hat. Alle Maßnahmen ergeben zusammen eine wesentlich höhere Zuverlässigkeit und Lebensdauer der Kontaktierungseinrichtung.

Eine besonders zuverlässige elektrische Verbindung zwischen den Vorsprüngen und der Metallfolie wird erhalten, wenn die Vorsprünge scharfkantig ausgebildet sind, weil hierdurch eine eventuell auf der Metallfolie anhaftende und schlecht leitende Oxidhaut durchdrungen werden kann, wenn die Kontaktierungseinrichtung in die entsprechend vorbereitete knapp tolerierte Öffnung des Radkotschützers eingedrückt wird. Dabei läßt sich eine sehr große Anzahl von elektrisch wirksamen Vorsprüngen erzeugen, wenn der Fortsatz zumindest im Bereich der Vorsprünge einen Kreisquerschnitt aufweist und die Vorsprünge selbst von einer Rändelung gebildet sind. Dabei hat die Rändelung den weiteren Vorteil, daß sie zusammen mit der Kunststoffschicht des Radkotschützers eine Verdrehsicherung für die Kontaktierungseinrichtung bildet, weil die Zähne der Rändelung auch in den Kunststoff eindringen, der eine sehr viel größere mechanische Festigkeit aufweist als die dünne, um allgemeinen aus Aluminium bestehende Metallfolie.

Die Vorsprünge können aber auch von den Ecken eines Vielkants, beispielsweise eines Sechskants, gebildet sein, die beim Einsetzen des Fortsatzes in die vorbereitete runde Öffnung des Radkotschützers in die Metallfolie eindrücken. Diese Ausführungsform gestattet auch die Verwendung eines ursprünglich kreisrunden rohrförmigen Fortsatzes, der nach dem Montieren der Kontaktierungseinrichtung in der Öffnung des Radkotschützers durch ein entsprechendes Werkzeug nachträglich vieleckig aufgeweitet wird. Hierdurch wird mit Sicherheit ein Verschleppen oder Verschmieren von Kunststoffmaterial in den Bereich zwischen dem Fortsatz und der Metallfolie vermieden.

Für die sichere Kontaktierung und auch für die Verdrehsicherung ist es völlig ausreichend, wenn die Vorsprünge, gemessen in Längsrichtung des Fortsatzes, eine Länge aufweisen, die kleiner als die Dicke des Radkotschützers ist, derart, daß sie im montierten Zustand innerhalb des Radkotschützers enden. Insbesondere kann hierdurch erreicht werden, daß die Abdichtung im Bereich der Befestigungseinrichtung, d.h. auf dem dem Kopf der Kontaktierungseinrichtung gegenüberliegenden Ende vereinfacht wird, weil keine an die Gestalt der Vorsprünge angepaßte Dichtung benötigt wird.

Ein Verschleppen oder Verschmieren von Kunststoff durch die Fortsätze beim Einsetzen der Kontaktierungseinrichtung wird vermieden, wenn die Vorsprünge des Fortsatzes an ihrem dem Kopf abgewandten Ende einen imaginären Kegelstumpf begrenzen, derart, daß die Vorsprünge sich allmählich in einem von dem Kegelstumpf gebildeten Übergangsbereich, ausgehend von dem Außenumfang des Fortsatzes, auf ihre volle Höhe über dem Außenumfang erheben.

Die Dichtigkeit im Bereich der Befestigungseinrichtung wird verbessert, wenn eine zusätzliche Dichtungseinrichtung vorgesehen ist, die zwischen der Befestigungseinrichtung und der im montierten Zustand benachbarten Fläche des Radkotschützers liegt und den Fortsatz konzentrisch dichtend umgibt. Eine solche Dichtungseinrichtung kann aus einer unverformbaren Beilagscheibe mit kegelstumpfförmiger Mittelöffnung sowie einer elastisch oder plastisch verformbaren Dichtungsscheibe bestehen, die beim Anziehen der Befestigungseinrichtung in die kegelstumpfförmige Mittelöffnung der Beilagscheibe eindringt und so den zwischen dem Fortsatz und dem Kunststoff des Radkotschützers bestehenden Spalt abdichtet.

Eine andere Möglichkeit der Dichtungseinrichtung besteht in einer glockenförmigen, auf den Fortsatz aufsetzbaren Haube sowie einem zwischen dem Fortsatz und dem inneren Hohlraum der Haube gekammerten O-Ring. Diese Art der Dichtungseinrichtung ist insbesondere bei einem vielkantigen Fortsatz zweckmäßig.

Die Dichtigkeit zwischen dem Kopf der Kontaktierungseinrichtung und dem Radkotschützer läßt sich insbesondere bei starker Wölbung des Radkotschützers dadurch verbessern, daß die Unterseite des Kopfes konkav ausgebildet ist. Eine andere Möglichkeit, um das gleiche Ziel zu erreichen, besteht darin, in der Unterseite des Kopfes eine den Fortsatz konzentrisch umgebende Ringnut vorzusehen. In beiden Fällen bilden sich nämlich verhältnismäßig scharfe Kanten, die sich dichtend in die weiche aus Kunststoff bestehende Außenfläche des Radkotschützers eindrücken.

Eine zumindest werkseitig sehr leicht und kostengünstig ausführbare Befestigungseinrichtung der Kontaktierungseinrichtung besteht darin, nach dem Einsetzen der Kontaktierungseinrichtung in die entsprechende Öffnung des Radkotschützers den Fortsatz, gegebenenfalls unter Zwischenlage der vorerwähnten Dichtungseinrichtungen, zu vernieten. Hierbei bildet der entsprechende Schließkopf die am Fortsatz verankerte Befestigungseinrichtung. Für Reparaturzwecke hingegen ist es vorteilhafter, wenn die Befestigungsvorrichtung von einem Außengewinde des Fortsatzes sowie einer auf das Außengewinde aufschraubbaren Mutter gebildet ist, weil dann auch ohne Zuhilfenahme aufwendiger Werkzeuge leicht ein nachträgliches Anbringen möglich ist.

Wenn die Kontaktierungseinrichtung eine Durchgangsbohrung aufweist, die den Kopf und den Fortsatz koaxial durchsetzt, kann zur weiteren elektrischen Verbindung ein Stecker verwendet werden, so daß ein schraubenfreier elektrischer Anschluß möglich wird.

Besonders preisgünstig wird die Kontaktierungseinrichtung, wenn sie nach Art eines Hohlniets hergestellt ist, wobei der Kopf der Kontaktierungseinrichtung von dem Nietkopf gebildet ist, der gegebenenfalls entsprechend den obigen Ausführungen gestaltet ist. In diesem Falle wird insbesondere das Vernieten bei der Montage der Kontaktierungseinrichtung sehr einfach, wobei obendrein gleichzeitig die Öffnung für den Stecker erhalten wird.

Die Beständigkeit der Kontaktierungseinrichtung läßt sich erhöhen, wenn sie aus einem korrosionsfesten Edelstahl besteht. Beispielsweise aus Edelstahl mit der Bezeichnung 4305.

In der Zeichnung sind Ausführungsbeispiele des Gegenstandes der Erfindung dargestellt. Es zeigen:

Fig. 1    eine in einen Ausschnitt eines Radkotschützers eingesetzte Kontaktierungseinrichtung gemäß der Erfindung mit einer Rändelung und einem Außengewinde, teilweise in Längsrichtung geschnitten,

Fig. 2    eine Kontaktierungseinrichtung gemäß der Erfindung in einer Darstellung und Ausführung ähnlich Fig. 1 in vernieteter Ausführung,

Fig. 3    eine Kontaktierungseinrichtung gemäß der Erfindung in der Ausführung als Hohlniet mit polygonalem Fortsatz unter Veranschaulichung unterschiedlicher Dichtungseinrichtungen in der linken und in der rechten Hälfte der Figur, in einem Längsschnitt und

Fig. 4    einen für die in den Fig. 1 bis 3 gezeigten Kontaktierungseinrichtungen geeigneten Stecker, teilweise längsgeschnitten.

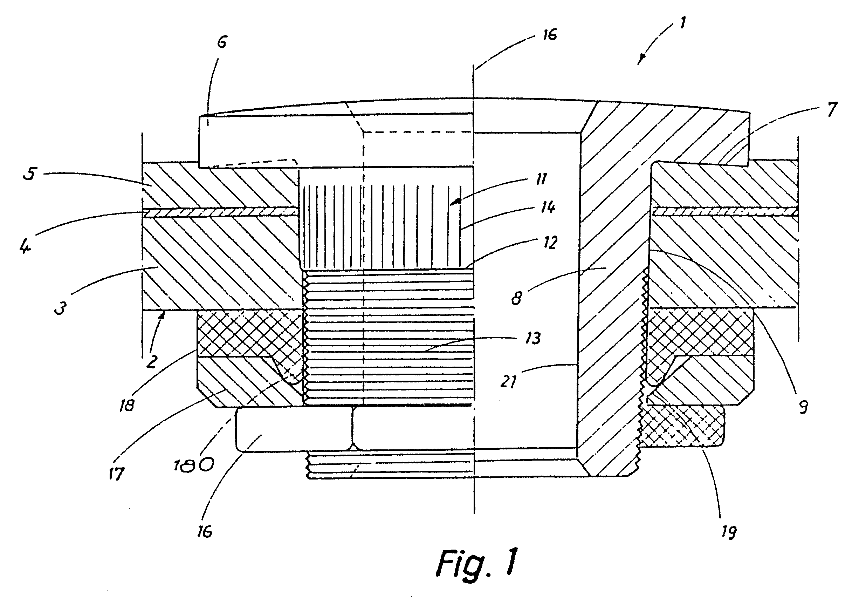

In Fig. 1 ist eine elektrische Kontaktierungseinrichtung 1 für einen ausschnittsweise veranschaulichten Radkotschützer 2 eines nicht weiter gezeigten Fahrrades veranschaulicht. Derartige Radkotschützer sind unter der Bezeichnung "Chromoplastics" bekannt und ihr Aufbau und ihre Herstellungsweise sind in der DE-AS 16 80 844 beschrieben, auf die hier ausdrücklich Bezug genommen ist.

Der Radkotschützer besteht aus drei sandwichartig übereinander befindlichen Lagen, nämlich einer unteren, dem eigentlichen Rad zugewandten Kunststoffschicht 3, einer darüber befindlichen dünnen Metallfolie 4 sowie einer schließlich über der Metallfolie 4 befindlichen weiteren Lage Kunststoffes 5. Die beiden Kunststofflagen 3 Und 5 umschließen vollständig die Metallfolie 4, die ca. 0,05 bis 0,1 mm stark ist und üblicherweise aus Aluminium besteht.

Die Kontaktierungseinrichtung dient dazu, eine elektrische Verbindung mit der zwischen den Kunststofflagen 3 und 5 eingebetteten Metallfolie 4 herzustellen, um so für die Stromzuleitung zu den auf dem Radkotschützer befestigten elektrischen Geräten eine kabelfreie Stromzuleitung zu erhalten.

Die Kontaktierungseinrichtung 1 enthält einen flachen scheibenförmigen, im Querschnitt kreisrunden Kopf 6, dessen der Kunststoffschicht 5 zugewandte Unterseite 7 in der veranschaulichten Weise konkav ausgebildet ist. Aus der Unterseite 7 des Kopfes 6 steht einstückig ein zylindrischer Fortsatz 8 hervor, der, wie Fig. 1 zeigt, im montierten Zustand durch eine entsprechende Öffnung 9 in dem Radkotschützer 2 hindurchführt. Der Kopf 6 sowie der Fortsatz 8 bestehen aus Metall.

Der zylindrische Fortsatz 8,der koaxial und rechtwinklig zu dem Kopf 6 verläuft, weist an seinem an die Unterseite 7 angrenzenden Abschnitt eine Rändelung 11 auf, die bei 12 in ein Außengewinde 13 übergeht, dessen Außendurchmesser in der dargestellten Weise kleiner ist als der Außendurchmesser der Rändelung 11. Die Höhe der Rändelung 11 ist kleiner als die Dicke des Radkotschützers 2, die im Bereich zwischen 1,5 ... 2,5 mm liegt.

Durch die Rändelung 11 entstehen auf dem Fortsatz 8 eine Vielzahl feiner Fortsätze oder Zähne 14 mit scharfen Kanten, die über den Außenumfang des Fortsatzes 8 hinausstehen und durch die Metallfolie 4 reichen. Die durch die gerade verlaufende, einfache Rändelung 11 entstehenden Zähne 14 verlaufen, wie gezeigt, parallel zur Längsachse 16 der Kontaktierungseinrichtung 1.

Um zu vermeiden, daß durch die Stirnflächen der durch die Rändelung 11 gebildeten Zähne 14 die Metallfolie 4 ausgestanzt wird, wenn die Kontaktierungseinrichtung 1 in die Öffnung 9 eingesetzt wird, bilden die Zähne 14 der Rändelung 11 in einem an das Außengewinde 13 angrenzenden Bereich 15, der ca. 0,1 mm hoch ist, einen imaginären Kegelstumpf, dessen kleiner Durchmesser dem Außendurchmesser des Außengewindes 13 entspricht und dessen großer Durchmesser gleich dem Außendurchmesser der Rändelung 11 ist. Der Außendurchmesser der Rändelung 11 ist vorzugsweise um 0,1 bis 0,2 mm größer als der Außendurchmesser des Gewindes 13, der ca. 4 mm beträgt.

Zur Halterung der Kontaktierungseinrichtung 1 in dem Radkotschützer 2 dient eine auf das Außengewinde 13 des Fortsatzes 8 aufgeschraubte Mutter 16, mit der eine Beilagscheibe 17 unter Zwischenlage einer weichen, plastisch oder elastisch verformbaren Dichtungsscheibe 18 an die Außenseite der Kunststofflage 3 angepreßt wird. Die Mittenbohrung 19 der planparallelen Beilagscheibe 17 ist kegelig ausgeführt, wobei ihr größerer Durchmesser der Dichtungsscheibe 18 zugekehrt ist, um durch ein Eindringen von Material der Dichtungsscheibe 18 ein wirksames Abdichten des Außengewindes 13, das als Feingewinde ausgebildet ist, zu erreichen. Dabei läßt sich die Dichtwirkung noch weiter steigern, wenn die Dichtungsscheibe 18 einen zu ihrer Mittenbohrung konzentrischen umlaufenden Wulst 180 enthält, der, wie dargestellt, in die kegelige Mittenbohrung 19 der unverformbaren, vorzugsweise aus Metall bestehenden Beilagscheibe 17,hineinragt, so daß auch bei geringen Axialkräften bereits der Wulst 180 von der schrägen Wandung der Mittenbohrung 19 an den Außenumfang des Fortsatzes 8 angedrückt wird. Hierbei ist es, um ein Hohlliegen der Dichtungsscheibe 13 in ihrem mittleren Bereich mit Sicherheit zu verhindern, zweckmäßig, wenn die der Kunststofflage 3 zugewandte Fläche der Dichtungsscheibe 18 konvex vorgeformt ist.

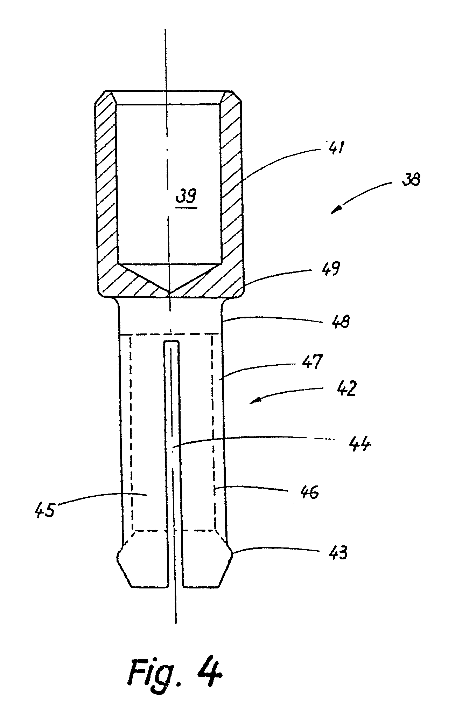

Da die gezeigte Kontaktieruntseinrichtung 1 als Steckbuchse dient für einen in Fig. 4 gezeigten Kontaktstecker, enthält sie eine zu dem Fortsatz 8 koaxiale zylindrische Durchgangsbohrung 21, die die Kontaktierungseinrichtung 1 vollständig durchsetzt.

Die Montage der Kontaktierungseinrichtung 1 an dem Radkotschützer 2 erfolgt in der Weise, daß zunächst an dem Radkotschützer 2 die Öffnung 9, beispielsweise durch Lochen, angebracht wird. Die lichte Weite der Öffnung 9 ist, um ein leichtes Einstecken der Kontaktierungseinrichtung 1 zu erreichen, geringfügig größer als der Außendurchmesser des Gewindes 13, jedoch deutlich kleiner als der Außendurchmesser der Rändelung 11. In die solchermaßen vorbereitete Öffnung 9 läßt sich die Kontaktierungseinrichtung 1 ohne weiteres leicht einführen, bis der kegelstumpfförmige Abschnitt 15 der Rändelung 11 an dem Außenrand der Öffnung 9 anliegt. Wenn jetzt mit erhöhter Kraft die Kontaktierungseinrichtung 1 weiter eingedrückt wird, wird aufgrund des kegelstumpfförmigen Abschnitts 15 die Kunststoffschicht 5 allmählich radial, bezogen auf die Längsachse 20, beiseite gedrückt, und zwar so, daß möglichst kein Kunststoff der Kunststofflage 5 von den Zähnen 14 der Rändelung 11 in Richtung der Einführbewegung der Kontaktierungseinrichtung 1 mitgenommen wird. Im Verlaufe des Eindrückens oder Einpressens der Kontaktierungseinrichtung 1 kommt schließlich der kegelstumpfförmige Abschnitt 15 bis zu der Metallfolie 4, die daraufhin ebenfalls allmählich seitlich bzw. radial, bezogen auf die Längsachse 16, zur Seite gedrückt wird, denn die Zähne 14 erheben sich in dem kegelstumpfförmigen Abschnitt 15 allmählich von dem Außendurchmesser des Gewindes 13 auf ihre vollständige Höhe.

Schließlich dringt die Rändelung 11 noch in die untere Kunststofflage 3 teilweise ein, denn die axiale Erstreckung der Rändelung 11 ist so bemessen, daß ihre Stirnseite 12 bei vollständig eingepreßter Kontaktierungseinrichtung 1 innerhalb der unteren Kunststofflage 3 zu liegen kommt.

Durch diese Konfiguration wird erreicht, daß die Metallfolie 4, die selbst eine geringe Elastizität erreicht, von den anhaftenden beiden Kunststoffschichten 3 und 5, die eine größere Rücksprungkraft aufweisen, an die Zähne 14 der Rändelung 11 hingedrückt wird. Da die Rändelung 11 scharfkantig ist, wird eine eventuelle Oxidhaut der Metallfolie 4 mit Sicherheit durchschnitten und es entstehen eine sehr große Anzahl von Kontaktstellen zwischen dem Fortsatz 8 und der Metallfolie 4. Schließlich wird unter Zwischenlage der elastischen Dichtungsscheibe 18 sowie der Beilagscheibe 17 die Mutter 16 aufgeschraubt und festgedreht, wodurch die Dichtscheibe 18 eingequetscht wird und in die kegelige Mittenöffnung 19 sowie die Gewindegänge des Gewindes 13 in diesem Bereich einfließt und das Gewinde 13 wirksam abdichtet. Außerdem wird eine Abdichtung gegen die Unterseite der Kunststofflage 3 erreicht, so daß die in der Öffnung 9 befindliche Kontaktstelle zwischen dem Fortsatz 8 und der Metallfolie 4 von dieser Seite her wirksam abgedichtet ist.

Durch das Festziehen der Mutter 16 wird aber die Kontaktierungseinrichtung 1 auch noch fester in die Öffnung 9 des Radkotschützers 2 hineingezogen, wodurch sich der äußere Rand der konkav ausgebildeten Unterseite 7 ebenfalls dichtend an die Außenseite der Kunststofflage 5 anlegt. Hierdurch ist die Kontaktstelle zwischen dem Fortsatz 8 und der Metallfolie 4 auch von der anderen Seite abgedichtet und es kann keine Feuchtigkeit oder Salzwasser zur Kontaktstelle vordringen.

Die Vorsprünge oder Zähne 14 der Rändelung 11 verhindern gleichzeitig beim Anziehen der Mutter 16 ein Mitdrehen des Fortsatzes 8 in der Öffnung 9, so daß komplizierte Werkzeuge zum Festhalten des Kopfes 6 entbehrlich sind.

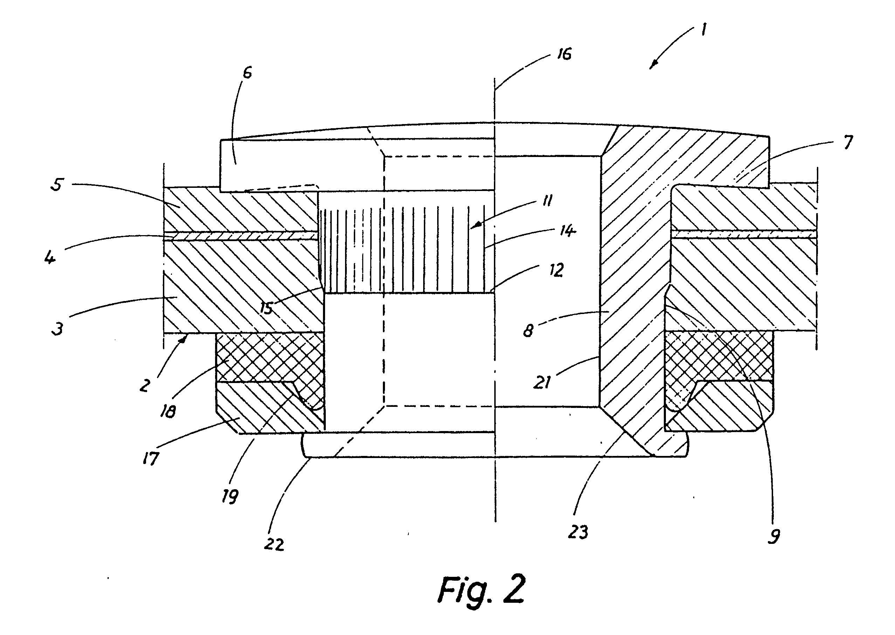

In Fig. 2 ist ein weiteres Ausführungsbeispiel der Kontaktierungseinrichtung 1 veranschaulicht, das sich von dem Ausführungsbeispiel nach Fig. 1 lediglich durch die Ausbildung der Befestigungseinrichtung unterscheidet, die im vorhergehenden Fall von dem Außengewinde 13 und der darauf geschraubten Mutter 16 gebildet ist. Für die Kontaktierungseinrichtung 1 nach Fig. 2 sind deshalb für einander entsprechende Bauteile, die nicht erneut beschrieben sind, dieselben Bezugszeichen verwendet.

Die Kontaktierungseinrichtung 1 nach Fig. 2 enthält wiederum einen zylindrischen, zu dem Kopf 6 koaxialen Fortsatz 8, der in seinem an die Unterseite 7 angrenzenden Bereich eine Rändelung 11 trägt, deren axiale Erstreckung ca. die Hälfte bis dreiviertel der Dicke des Radkotschützers 2 beträgt. Der sich an die Rändelung 11 anschließende Teil des Fortsatzes 8 ist jedoch glattwandig zylindrisch ausgebildet, wobei der Außendurchmesser kleiner als der Außendurchmesser der Rändelung 11 ist.

Die Befestigung der Kontaktierungseinrichtung 1 erfolgt durch Vernieten des freien Endes des Fortsatzes 8, bei dem der in Fig. 2 gezeigte Schließkopf 22 entsteht. Der Schließkopf 22 preßt die Beilagscheibe 17, wie vorher, gegen die Dichtungsscheibe 18, die dabei in die kegelige Mittenöffnung 19 hineinfließt.

Obwohl bei sorgfältiger Ausführung die Trennfuge zwischen der Beilagscheibe 17 und dem Schließkopf 22 an sich dicht ist, ist dennoch die Dichtungsscheibe 18 zweckmäßig, weil nämlich die Außenseite der Kunststofflage 3 infolge der Form des Radkotschützers 2 in der Regel um zwei Achsen mit verschiedenen Krümmungsradien gekrümmt ist, so daß unter Umständen ohne die Dichtungsscheibe 18 Undichtigkeiten zwischen der bei der Vernietung erforderlichen Beilagscheibe 17 und der Unterseite der Kunststofflage 3 entstehen können.

Um die Bildung des Schließkopfes 22 zu vereinfachen, ist der Fortsatz 8 an seinem dem Kopf 6 abgewandten Ende bei 23 angesenkt.

Im übrigen sind die Abmessungen und die Montageart dieselben wie bei dem Ausführungsbeispiel nach Fig. 1.

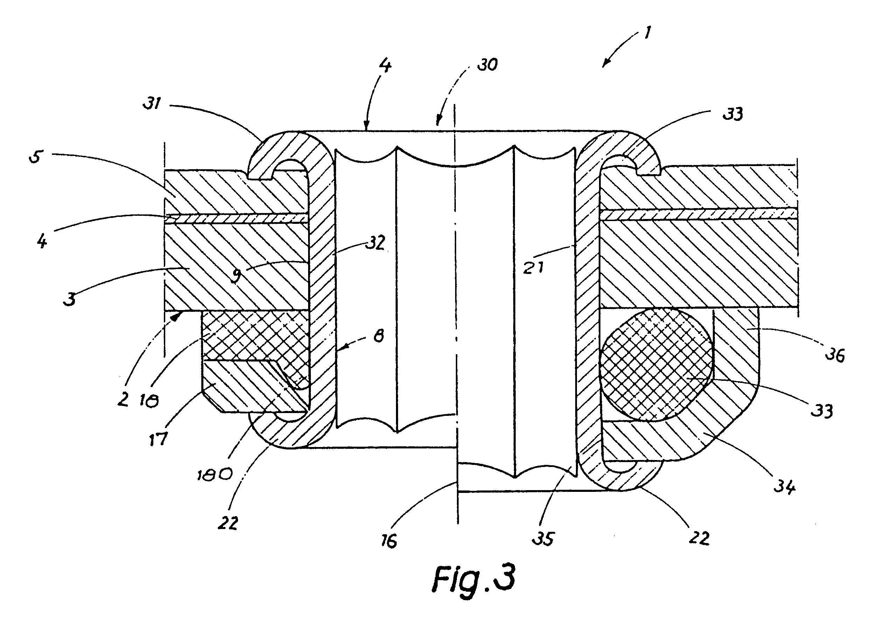

In Fig. 3 sind zwei weitere Ausführungsbeispiele der Kontaktierungseinrichtung 1 veranschaulicht. Die Kontaktierungseinrichtung 1 besteht hierbei aus einem Hohl- oder Rohrniet 30 mit einem Nietkopf 31 und einem sich daran anschließenden zylindrischen rohrförmigen Schaft 32. Der Nietkopf 31 ist, bezogen auf den Schaft 32, um 180° nach außen umgebördelt und bildet so unter Einschluß einer um den Schaft 32 herumlaufenden Ringnut 33 den Kopf 6 der Kontaktierungseinrichtung 1, während der Fortsatz 8 aus dem Schaft 32 besteht.

Die Verankerung der Kontaktierungseinrichtung 1 in dem Radkotschützer 2 erfolgt wie bei Fig. 2 durch Vernieten unter Ausbildung des Schließkopfes 22; im übrigen werden, wie die linke Hälfte von Fig. 3, bezogen auf die Längsachse 16 zeigt, dieselben Maßnahmen verwendet, die zum Abdichten in den vorhergehenden Figuren gezeigt sind. Wiederum bezeichnen dieselben Bezugszeichen im Zusammenhang mit den vorhergehenden Figuren beschriebene Bauteile.

Die Kontaktierungseinrichtung 1 nach Fig. 3 wird folgendermaßen montiert:

Nach dem Herstellen der Öffnung 9, wiederum durch Lochen, wird die mit dem Nietkopf 31 versehene Rohrniete 30 mit ihrem zunächst außen noch zylindrischen Schaft 32, der den Fortsatz 8 bildet, in die Öffnung 9 eingeführt. Die Öffnung 9 hat hierzu einen geringfügig größeren Innendurchmesser als der Außendurchmesser des Fortsatzes 8, so daß kein Kunststoffmaterial von dem dem Nietkopf 31 abgewandten Ende des Fortsatzes 9 abgetragen wird. Nachdem die Kontaktierungseinrichtung in den Radkotschützer 2 eingesetzt ist, wird die Dichtscheibe 18 und die Beilagscheibe 17 aufgesetzt und durch Vernieten der Schließkopf 22 geschlossen, wodurch einerseits der äußere Rand des Nietkopfes 31 in die Kunststofflage 5 eingedrückt wird und außerdem die Dichtscheibe 18 zwischen der Kunststofflage 3 und der Beilagscheibe 17 eingequetscht wird. Der Innenraum ist damit wirksam abgedichtet.

Hernach wird in die Öffnung 21 der Kontaktierungseinrichtung 1, d.h. in den Schaft 32 der fertig vernieteten Rohrniete 30 ein Dorn mit regulär polygonalem Querschnitt, beispielsweise sechseckig, eingepreßt, wodurch an der Außenseite des Fortsatzes 8 durch Aufweiten und Umformen Vorsprünge entstehen, die in die Metallfolie 4 eindringen und den gewünschten elektrischen Kontakt herstellen.

Anstelle der im wesentlichen flachen Dichtscheibe 18, wie sie in der linken Hälfte von Fig. 3 gezeigt ist, kann auch ein gekammerter O-Ring 330 verwendet werden. Hierzu sitzt zwischen dem Schließkopf 22 und der Kunststofflage 3 des Radkotschützers 2 eine etwa glockenförmige Haube 34, die mit ihrer Mittenöffnung 35 auf den Fortsatz 8 aufgeschoben ist und mit ihrem etwa parallel zu dem Fortsatz 8 verlaufenden Rand 36 in Richtung auf die Kunststofflage 3 zu weist. Es entsteht so zwischen der Innenseite der Haube 34 und der Außenseite des Fortsatzes 8 eine Kammer, in der der O-Ring 330 in bekannter Weise eingeklemmt ist, da die Höhe des von der Haube 34 in axialer Richtung begrenzten Raumes kleiner als die Dicke des O-Ringes 330 ist. Im montierten Zustand legt sich dadurch der O-Ring 330 dichtend an die Außenseite des Fortsatzes 8, die Außenseite der Kunststofflage 3 und die Innenwand der Haube 34 an, die sich ihrerseits mit ihrer Stirnseite an der Außenseite der Kunststofflage 3 abstützt.

Die Kontaktierungseinrichtung 1, wie sie in den verschiedenen Formen in den Figuren gezeigt ist, besteht aus einem korrosionshemmenden oder korrosionsfreien Material, vorzugsweise Edelstahl mit der Bezeichnung 4305.

In Fig. 4 ist schließlich ein für die Kontaktierungseinrichtung 1 geeigneter Stecker 38, ebenfalls aus Edelstahl, gezeigt, der einen oberen, mit einer Sackbohrung 39 versehenen zylindrischen Schaftteil 41 sowie einen koaxial dazu einstückig angeformten Steckerteil 42, ebenfalls mit Kreisquerschnitt, aufweist. Der zylindrische Steckerteil 42 trägt an seinem dem Schaftteil 41 abgewandten Ende einen umlaufenden Wulst 43 und ist der Länge nach bei 44 geschlitzt. Der Schlitz 44 verläuft durch die Längsachse des Steckers 38 und gestattet ein Zusammenfedern der hierdurch entstehenden Backen 45 und 46, wenn der Wulst 43 in die Öffnung 21 der Kontaktierungseinrichtung 1 eindringt. Eine weichere Federwirkung wird erreicht, wenn der Steckerteil 42 im Bereich zwischen dem Wulst 43 und dem Schaftteil 41 mit einer Verjüngung 47 versehen ist, wie sie durch die gestrichelten Linie angedeutet ist. Die Verjüngung 47 reicht dabei nicht bis an den oberen Schaftteil 41 heran, sondern es verbleibt ein kurzer zylindrischer Abschnitt 48, dessen Außendurchmesser der lichten Weite der Öffnung 21 der Kontaktierungseinrichtung 1 entspricht, um den Stecker sicher in der Kontaktierungseinrichtung 1 zu führen. Es versteht sich, daß die Länge des Steckerteils 42 an die axiale Länge der Kontaktierungseinrichtung 1 angepaßt ist, in der Weise, daß der Wulst 43 im zylindrischen Bereich der Bohrung 21 zu liegen kommt, wenn die zwischen dem Steckerteil 42 und dem Schaftteil 41 gebildete Schulter 49 auf dem Kopf 6 aufliegt. Zum leichteren Einführen kann hierbei der Steckerteil 42 an seinem freien Ende kegelstumpfförmig angespitzt sein.

Die Befestigung des Kabels in der Sackbohrung 39 des Schaftteiles 41 erfolgt durch Einlöten, Anschweißen oder Zuquetschen des Schaftteiles 41.

**Patentansprüche**

1. Elektrische Kontaktierungseinrichtung für sandwichartig aufgebaute, aus Kunststoff und wenigstens einer von dem Kunststoff allseitig umschlossenen Metallfolie bestehende Radkotschützer, mit einem metallischen Kopf, der eine im wesentlichen flache, auf einer Außenseite des Radkotschützers anpreßbare Unterseite aufweist, mit einem an die Unterseite angeformten Fortsatz, der rechtwinklig zu der Unterseite verläuft und im montierten Zustand den Radkotschützer durchdringt, sowie mit einer an dem Fortsatz verankerten Befestigungseinrichtung, durch die die Unterseite des Kopfes an den Radkotschützer anpreßbar ist, dadurch gekennzeichnet, daß lediglich ein Fortsatz (8, 32) vorgesehen ist, der konzentrisch zu dem Kopf (6) angeordnet ist und an dessen Außenumfang eine Vielzahl von Vorsprüngen (14) ausgebildet sind, die in Längsrichtung des Fortsatzes (8, 32) verlaufen, und daß die Befestigungseinrichtung (16, 22) den Fortsatz (8, 32) konzentrisch umgibt.

2. Kontaktierungseinrichtung nach Anspruch 1, dadurch gekennzeichnet, daß die Vorsprünge (14) scharfkantig sind.

3. Kontaktierungseinrichtung nach Anspruch 1, dadurch gekennzeichnet, daß der Fortsatz (8) zumindest im Bereich der Vorsprünge (14) einen Kreisquerschnitt aufweist,und daß die Vorsprünge (14) von einer Rändelung (11) gebildet sind.

4. Kontaktierungseinrichtung nach Anspruch 1, dadurch gekennzeichnet, daß die Vorsprünge (14) von den Ecken eines Vielkants gebildet sind.

5. Kontaktierungseinrichtung nach Anspruch 1, dadurch gekennzeichnet, daß die Vorsprünge (14), gemessen in Längsrichtung des Fortsatzes (8),eine Länge aufweisen, die kleiner als die Dicke des Radkotschützers (2) ist, derart, daß sie im montierten Zustand innerhalb des Radkotschützers (2) enden.

6. Kontaktierungseinrichtung nach Anspruch 1, dadurch gekennzeichnet, daß die Vorsprünge (14) des Fortsatzes (8) an ihrem dem Kopf (6) abgewandten Ende (12) einen imaginären Kegelstumpf (15) begrenzen, derart, daß die Vorsprünge (14) sich allmählich in einem von dem Kegelstumpf (15) gebildeten Übergangsbereich, ausgehend von dem Außenumfang des Fortsatzes (8), auf ihre volle Höhe über den Außenumfang erheben.

7. Kontaktierungseinrichtung nach Anspruch 1, dadurch gekennzeichnet, daß sie eine Dichtungseinrichtung (17, 18, 33, 34) aufweist, die zwischen der Befestigungseinrichtung (16, 22) und der im montierten Zustand benachbarten Fläche des Radkotschützers (2) liegt und den Fortsatz (8, 32) konzentrisch dichtend umgibt.

8. Kontaktierungseinrichtung nach Anspruch 7, dadurch gekennzeichnet, daß die Dichtungseinrichtung eine unverformbare Beilagscheibe (17) mit kegelförmiger Mittenöffnung (19) sowie eine elastisch oder plastisch verformbare Dichtscheibe (18) aufweist.

9. Kontaktierungseinrichtung nach Anspruch 7, dadurch gekennzeichnet, daß die Dichtungseinrichtung eine glockenförmig auf dem Fortsatz (8, 32) sitzende Haube (34) sowie einen zwischen dem Fortsatz (8, 32) und dem inneren Hohlraum der Haube (34) gekammerten O-Ring (330) aufweist.

10. Kontaktierungseinrichtung nach Anspruch 1, dadurch gekennzeichnet, daß die Unterseite (7) des Kopfes (6) konkav ausgebildet ist.

11. Kontaktierungseinrichtung nach Anspruch 1, dadurch gekennzeichnet, daß die Unterseite des Kopfes (6) eine den Fortsatz (8, 32) konzentrisch umgebende Ringnut (33) enthält.

12. Kontaktierungseinrichtung nach Anspruch 1, dadurch gekennzeichnet, daß die Befestigungseinrichtung von einem Außengewinde (13) des Fortsatzes (8) sowie einer auf das Außengewinde (13) aufschraubbaren Mutter (16) gebildet ist.

13. Kontaktierungseinrichtung nach Anspruch 1, dadurch gekennzeichnet, daß die Befestigungseinrichtung von einem nach dem Einsetzen der Kontaktierungseinrichtung (1) in eine Öffnung (9) des Radkotschützers (2) angebrachten und durch Vernieten des Fortsatzes (8, 32) entstehnden Schließkopf (22) gebildet ist.

14. Kontkatierungseinrichtung nach Anspruch 1, dadurch gekennzeichnet, daß sie eine den Kopf (6, 31) und den Fortsatz (8, 32) koaxial durchsetzende Durchgangsbohrung (21) zur Aufnahme eines Steckers (38) aufweist.

15. Kontaktierungseinrichtung nach Anspruch 1, dadurch gekennzeichnet, daß sie die Gestalt eines Hohlniets (30) aufweist, wobei der Kopf (6) von dem Nietkopf (31) gebildet ist.

16. Kontaktierungseinrichtung nach Anspruch 1, dadurch gekennzeichnet, daß sie aus einem korrosionsfesten Metall, insbesondere Edelstahl, besteht.

## Claims

1. An electric contacting device for wheel mudguards of sandwich construction and consisting of plastics and at least one metal foil enclosed on all sides by the plastics, and having: a metal head having a substantially flat underside which can be pressed against an outer side of the wheel mudguard; an extension which is formed on said underside and which extends at right angles thereto and which in the assembled condition extends through the wheel mudguard; and a fastening device which is anchored to the extension and via which the underside of the head can be pressed against the wheel mudguard, characterized in that only one extension (8, 32) is provided, which is concentric of the head (6) and whose external periphery is formed with a plurality of projections (14) extending in the lateral direction of the extension (8, 32), and the fastening device (16, 22) encloses the extension (8, 32) concentrically.

2. A contacting device according to claim 1, characterized in that the projections (14) are sharp-edged.

3. A contacting device according to claim 1, characterized in that the extension (8) has a circular cross-section at least in the zone of the projections (14), and the projections (14) are formed by a knurling (11).

4. A contacting device according to claim 1, characterized in that the projections (14) are formed by the edges of a polyhedron.

5. A contacting device according to claim 1, characterized in that the projections (14), measured in the longitudinal direction of the extension (8), have a length which is smaller than the thickness of the wheel mudguard (2), so that in the assembled condition the projections terminate inside the wheel mudguard (2).

6. A contacting device according to claim 1, characterized in that at their end (12) remote from head (6) the projections (14) of the extension (8) so bound an imaginary frustrum (15) that the projections (14), starting from the external periphery of the extension (8), gradually rise to their full height above said external periphery in a transition zone formed by the frustrum (15).

7. A contacting device according to claim 1, characterized in that it has a sealing device (17, 18, 33, 34) which is disposed between the fastening device (16, 22) and the face of the wheel mudguard (2) adjacent in the assembled condition and which sealingly encloses the extension (8, 32) concentrically.

8. A contacting device according to claim 7, characterized in that the sealing device has a non-deformable shim (17) formed with a conical central opening (19) and a resiliently or plastically deformable sealing disc (18).

9. A contacting device according to claim 7, characterized in that the sealing device has a hood (34) which fits in bell-shape on to the extension (8, 32) and an O-ring seal (330) clamped between the extension (8, 32) and the inner cavity of the hood (34).

10. A contacting device according to claim 1, characterized in that the underside (7) of the head (6) is constructed concave.

11. A contacting device according to claim 1, characterized in that the underside of the head (6) is formed with an annular groove (33) enclosing the extension (8, 32) concentrically.

12. A contacting device according to claim 1, characterized in that the fastening device is formed by an external screwthreading (13) of the extension (8) and a nut (16) which can be screwed on to the external screwthreading (13).

13. A contacting device acording to claim 1, characterized in that the fastening device is formed by a closure head (22) produced by the riveting of the extension (8, 32) and introduced into an opening (9) in the wheel mudguard (2) after the contacting device (1) has been inserted.

14. A contacting device according to claim 1, characterized in that it is formed with a continuous bore (21) extending axially through the head (6, 31) and the extension (8, 32) to receive a plug (38).

15. A contacting device according to claim 1, characterized in that it has the shape of a hollow rivet (30), the head (6) being formed by the rivet head (31).

16. A contacting device according to claim 1, characterized in that it is made from a corrosion-resistant metal, more particularly special steel.

**Revendications**

1. Dispositif de connexion électrique pour des garde-boue de roue à structure en sandwich et constitués de matière plastique et d'au moins une feuille métallique entourée sur tous les côtés par la matière plastique, comprenant une tête métallique qui présente une face inférieure sensiblement plane pouvant être pressée contre une face extérieure du garde-boue, un prolongement qui est formé d'une seule pièce sur la face inférieure, s'étend à angle droit par rapport à la face inférieure et traverse le garde-boue à l'état monté, ainsi qu'un dispositif de fixation qui est ancré sur le prolongement et permet de presser la face inférieure de la tête contre le gardeboue, caractérisé par le fait qu'il est prévu un seul prolongement (8, 32) qui est disposé de façon concentrique par rapport à la tête (6) et sur la circonférence duquel il est formé une multitude de saillies (14) s'étendant dans la direction longitudinale du prolongement (8, 32), et que le dispositif de fixation (16, 22) entoure le prolongement (8, 32) de façon concentrique.

2. Dispositif de connexion selon la revendication 1, caractérisé par le fait que les saillies (14) présentent des arêtes vives.

3. Dispositif de connexion selon la revendication 1, caractérisé par le fait que le prolongement (8) présente une section circulaire au moins dans la zone des saillies (14), et que les saillies (14) sont formées par un moletage (11).

4. Dispositif de connexion selon la revendication 1, caractérisé par le fait que les saillies (14) sont formées par les angles d'un polygone.

5. Dispositif de connexion selon la revendication 1, caractérisé par le fait que, mesuré dans la direction longitudinale du prolongement (8), les saillies (14) présentent une longueur qui est inférieure à l'épaisseur du garde-boue (2), de manière telle qu'à l'état monté elles se terminent à l'intérieur du garde-boue (2).

6. Dispositif de connexion selon la revendication 1, caractérisé par le fait qu'à leur extrémité (12) éloignée de la tête (6), les saillies (14) du prolongement (8) délimitent un cône tronqué (15) imaginaire, de manière telle qu'en partant de la circonférence du prolongement (8), les saillies (14) s'élèvent progressivement jusqu'à leur pleine hauteur sur la circonférence, dans une zone de transition formée par le cône tronqué (15).

7. Dispositif de connexion selon la revendication 1, caractérisé par le fait qu'il présente un dispositif d'étanchéité (17, 18, 33, 34) qui se trouve entre le dispositif de fixation (16, 22) et la surface du garde-boue (2) voisine à l'état monté et entoure de manière concentrique en faisant étanchéité le prolongement (8, 32).

8. Dispositif de connexion selon la revendication 7, caractérisé par le fait que le dispositif d'étanchéité présente une rondelle de calage (17) non déformable comprenant une ouverture centrale (19) conique, et une rondelle d'étanchéité (18) déformable de façon élastique ou plastique.

9. Dispositif de connexion selon la revendication 7, caractérisé par le fait que le dispositif d'étanchéité présente une coiffe (34) rapportée à la manière d'une calotte sur le prolongement (8, 32), et un joint torique (330) serré entre le prolongement (8, 32) et la cavité intérieure de la coiffe (34).

10. Dispositif de connexion selon la revendication 1, caractérisé par le fait que la face inférieure (7) de la tête (6) est concave.

11. Dispositif de connexion selon la revendication 1, caractérisé par le fait que la face inférieure de la tête (6) comporte une gorge annulaire (33) entourant le prolongement (8, 32) de façon concentrique.

12. Dispositif de connexion selon la revendication 1, caractérisé par le fait que le dispositif de fixation est formé par un filetage extérieur (13) du prolongement (8) et un écrou (16) pouvant être vissé sur le filetage extérieur (13).

13. Dispositif de connexion selon la revendication 1, caractérisé par le fait que le dispositif de fixation est formé par une tête fermante (22) qui est appliquée après l'insertion du dispositif de connexion (1) dans une ouverture (9) du garde-boue (2) et est obtenue par le rivetage du prolongement (8, 32).

14. Dispositif de connexion selon la revendication 1, caractérisé par le fait qu'il présente un trou débouchant (21) traversant coaxialement la tête (6, 31) et le prolongement (8, 32) , pour recevoir une fiche (38).

15. Dispositif de connexion selon la revendication 1, caractérisé par le fait qu'il présente la forme d'un rivet tubulaire (30), la tête (6) étant formée par la tête de rivet (31).

16. Dispositif de connexion selon la revendication 1, caractérisé par le fait qu'il est en métal résistant à la corrosion, notamment en acier spécial.

Fig. 1

Fig. 2

Fig.3

Fig. 4